## Europäisches Patentamt

## European Patent Office

## Office européen des brevets

(11) Numéro de publication: **0 036 827 B1**

(12) **FASCICULE DE BREVET EUROPEEN**

(45) Date de publication du fascicule du brevet: **06.02.85**

(51) Int. Cl.⁴: **H 02 P 7/28, B 60 L 15/08**

(21) Numéro de dépôt: **81400478.4**

(22) Date de dépôt: **26.03.81**

(54) Dispositif de traction électrique à moteur série à courant continu alimenté par un hacheur qui peut être commandé en conduction continue.

(30) Priorité: **26.03.80 FR 8006682**

(43) Date de publication de la demande:
**30.09.81 Bulletin 81/39**

(45) Mention de la délivrance du brevet:
**06.02.85 Bulletin 85/06**

(84) Etats contractants désignés:
**BE CH DE GB IT LI SE**

(56) Documents cités:
**DE-B-1 231 747**
**FR-A-2 301 126**
**US-A-3 668 491**
**US-A-4 019 108**

**IEEE Conference Record of IAS/1974 Ninth Annual Meeting of the IEEE Industry Applications Society, Part I, pages 85-94**

(73) Titulaire: **CEM COMPAGNIE ELECTRO-MECANIQUE & Cie Société en Nom Collectif 37, rue du Rocher F-75383 Paris Cedex 08 (FR)**

(72) Inventeur: **N'Guyen Uyen, Thuy 34, rue du Bret Cedex 222 Villefontaine F-38290 La Verpilliere (FR)**

(74) Mandataire: **Laget, Jean-Loup et al Cabinet Pierre Loyer 18, Rue de Mogador F-75009 Paris (FR)**

Courier Press, Leamington Spa, England.

EP 0 036 827 B1

## Description

L'invention concerne un dispositif de traction à courant continu muni d'un moteur excité en série et dont l'alimentation est réglée par un convertisseur statique continu-continu du type hacheur.

Les dispositions de ce genre peuvent être utilisés par exemple dans les véhicules à batteries (chariots, automobiles ...) et plus particulièrement pour la traction des locomotives électriques.

Le choix du moteur de type série, dans le domaine de la traction s'est imposé depuis longtemps grâce à ses nombreux avantages par rapport aux autres types connus. En outre, les équipements de tels moteurs qui étaient électromécaniques se sont développés vers des équipements statiques utilisant des convertisseurs continu-continu du type hacheur.

Ces convertisseurs permettent en effet de fournir directement une tension variable de manière continue en offrant de nombreux avantages par rapport à dispositif du type rhéostat par exemple.

Un hacheur peut être comparé à un interrupteur statique à fermetures et ouvertures périodiques qui transmet une tension moyenne variable.

En outre, on désire généralement un courant très faiblement ondulé.

C'est pourquoi il a été imaginé d'aménager un circuit dénommé de libre circulation ou encore de roue libre qui permet de maintenir le courant dans le moteur lorsqu'il est interrompu dans le hacheur. Les selfs-inductances du circuit moteur accumulent de l'énergie lorsque le hacheur est passant et le restituent par le circuit de roue libre lorsque le hacheur est bloqué.

Un tel circuit de roue libre est facilement réalisable au moyen d'une diode disposée en parallèle sur le moteur.

En outre, une self-inductance de lissage est généralement disposée dans le circuit moteur afin de réduire l'ondulation du courant.

Si T représente la période de découpage du hacheur et tf la durée de conduction du hacheur, il est clair que le rapport de conduction tf/T dudit hacheur est réglable en faisant varier soit tf (variation à fréquence fixe), soit T (variation à fréquence variable).

Les dispositifs de traction à moteur courant continu type "série" alimenté par un hacheur statique comportent donc généralement une diode de roue libre et une self-inductance de lissage. Toutefois, il est connu que pour les dispositifs de ce genre, dans lesquels l'inducteur comporte un dispositif de shuntage à thyristor dont le blocage est lié à celui du hacheur ou dans lesquels l'inducteur série est disposé dans le circuit de la diode de roue libre (shuntage automatique d'inducteur), il n'est pas permis d'autoriser le passage en conduction continue du hacheur sous peine d'annuler complètement le flux du moteur, et donc, de ce fait, de provoquer un fonctionnement dangereux.

De tels dispositifs présentent notamment le double inconvénient, d'une part, de créer des pertes permanentes dues au hacheur en fonctionnement et d'autre part; de provoquer une chute de tension indésirable entre le réseau d'alimentation et le moteur, ce qui réduit les performances du dispositif et son rendement après la phase de démarrage.

Il existe également des dispositifs dans lesquels le hacheur peut être forcé ou autorisé à passer en conduction continue après la phase de démarrage, le moteur comportant alors deux enroulements inducteurs type série dont l'un est disposé dans le circuit de la diode de roue libre et l'autre dans le circuit induit du moteur (IEEE Conference Record of IAS/1974 Ninth Annual Meeting of the IEEE Industry Applications Society Part I, pages 85—94).

Des dispositifs de ce type présentent toutefois l'inconvenient de nécessiter un effort de démarrage variable non contrôlable.

C'est pourquoi l'invention a notamment pour but de fournir un dispositif qui obvie aux inconvénients sus-mentionnés. En outre, le dispositif selon l'invention permet d'augmenter la stabilité du système de traction, de réduire l'ondulation du flux inducteur du moteur de traction et d'améliorer le rendement.

Pour atteindre ces buts, l'invention propose un dispositif de traction élecyrique à courant continu, muni d'au moins un moteur, dont l'enroulement inducteur est monté en série avec l'induit et éventuellement une self de lissage, et dont l'alimentation est réglée par un convertisseur de courant continu-continu du type hacheur susceptible d'être amené au passage en conduction continue, l'inducteur étant divisé en au moins un premier et un second enroulements partiels montés en série pour créer des flux additifs, une diode de roue libre étant montée en parallèle sur le moteur, la self de lissage et l'inducteur, l'inducteur étant muni d'un dispositif de shuntage de réduction d'excitation, caractérisé en ce que le dispositif de shuntage est monté en parallèle sur l'ensemble dudit premier enroulement et d'une diode montée en série avec ledit premier enroulement, la diode de roue libre étant branchée au point commun à ladite diode et audit premier enroulement.

Dans ce cas, lorsque le hacheur est ainsi forcé en conduction continue, il est évidemment possible de reprendre le contrôle du flux inducteur total, en contrôlant de nouveau le fonctionnement du hacheur.

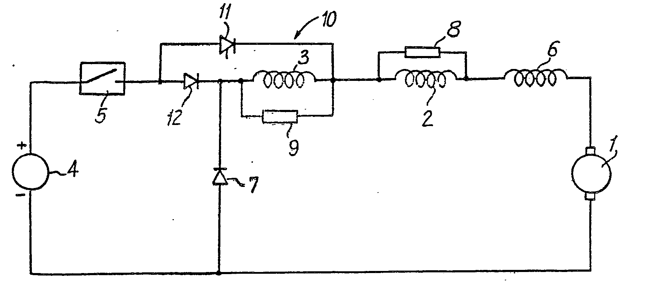

L'invention sera mieux comprise à la lecture de la description qui va suivre et qui se réfère au dessin annexé dans lequel la figure montre schématiquement un mode de réalisation selon l'invention.

Le dispositif représenté sur la figure comporte un moteur de traction à courant continu et excitation série qui est muni d'un induit 1 et de deux enroulements inducteurs respectivement 2 et 3.

Le moteur est alimenté par une source 4 qui est réglé par un hacheur 5. Cette source 4 est par exemple constituée par la caténaire d'alimentation d'une locomotive équipée du dispositif selon l'invention.

Les inducteurs 2 et 3 sont disposés en série avec l'induit 1 et la source 4. En outre, une self de lissage 6 est également montée en série dans le circuit de l'induit 1.

Une diode 7, de libre circulation ou encore de roue libre est montée en parallèle sur l'ensemble des éléments série sus-mentionnés 1, 2, 3 et 6, son anode étant tournée du côté négatif de la souce 4.

Comme il a déjà été dit, la self de lissage 6 réduit les ondulations de courant et la diode de roue libre permet l'écoulement d'énergie magnétique emmagisinée dans les différents selfs pendant le blocage du hacheur 5.

Les inducteurs 2 et 3 présentent avantageusement des résistances 8 et 9 de dérivation destinées à dériver les composantes alternatives du courant ondulé de manière que le courant qui circule dans lesdits inducteurs soit pratiquement continu.

L'inducteur 3 est en outre muni d'un dispositif de shuntage 10.

Sur la figure, le dispositif de shuntage d'inducteur est d'un type bien connu comprenant un thyristor 11 et un semi-conducteur 12.

Le dispositif de la figure fonctionne de la manière suivante:

Au cours de la phase de démarrage, le rapport de conduction du hacheur 5 varie entre un minimum et un maximum tandis que le dispositif de shuntage 10 de l'inducteur 3 ne fontionne pas. Dans ces conditions, les courants dans les inducteurs 2 et 3 et dans l'induit 1 sont alors sensiblement égaux en valeur moyenne, si l'on néglige les effets des dérivations permanentes constituées par les résistances 8 et 9.

Lorsque le rapport de conduction sus-mentionné atteint sa valeur maximale, le thyristor 11 du dispositif de shuntage 10 se débloque et provoque une réduction progressive vers zéro du flux inducteur créé par l'inducteur 3, tout en maintenant des courants constants dans l'induit 1 et l'inducteur 2.

Quand le flux inducteur de l'inducteur 3 devient sensiblement nul, le hacheur 5 peut alors être forcé au passage en conduction continue. Dans ce cas, le blocage du hacheur étant utilisé pour éteindre le thyristor 11, ce dernier ne se débloque plus et le flux inducteur provenant de l'inducteur 3 disparaît complètement. L'inducteur 2 reste alors seul en circuit pour fournir le flux inducteur nécessaire au fonctionnement du moteur de traction selon ses caractéristiques propres.

Dans le dispositif décrit ci-avant, il est clair que si l'on désire contrôler de nouveau le flux inducteur total, il est nécessaire de contrôler de nouveau le fonctionnement du hacheur 5 et de ramener son rapport de conduction à une valuer inférieure à 1.

**Revendications**

1. Dispositif de traction électrique à courant continu, muni d'au moins un moteur, dont l'enroulement inducteur est monté en série avec l'induit (1) et éventuellement une self de lissage (6), et dont l'alimentation est réglée par un convertisseur de courant continu-continu du type hacheur (5) susceptible d'être amené au passage en conduction continue, l'inducteur étant divisé en au moins un premier et un second enroulements partiels (2, 3) montés en série pour créer des flux additifs, une diode de roue libre (7) étant montée en parallèle sur le moteur, la self de lissage et l'inducteur, l'inducteur étant muni d'un dispositif de shuntage de réduction d'excitation, caractérisé en ce que le dispositif de shuntage (10) est monté en parallèle sur l'ensemble dudit premier enroulement (3) et d'une diode (12) montée en série avec ledit premier enroulement (3), la diode de roue libre (7) étant branchée au point commun à ladite diode (12) et audit premier enroulement (3).

2. Dispositif selon la revendication 1, caractérisé en ce que le dispositif de shuntage est constitué par un thyristor (11) dont l'extinction est assurée par le hacheur (5) du fait que le dispositif de shuntage (10) et le hacheur (5) fonctionnent à la même fréquence.

3. Dispositif selon la revendication 2, caractérisé en ce que le dispositif de shuntage (10), dont l'extinction est assurée par le hacheur (5) assure le réglage du flux inducteur total.

**Patentansprüche**

1. Elektrische Gleichstrom-Traktionseinrichtung mit mindestens einem Motor, dessen Feldwicklung in Reihe mit dem Anker (1) und gegebenenfalls einer Glättungsinduktivität (6) geschaltet ist, und dessen Speisung durch einen Gleichstrom-Gleichstrom-Wandler vom Zerhackertyp (5) geregelt ist, der auf kontinuierliches Leiten geschaltet werden kann, wobei die Feldwicklung in mindestens eine erste und eine zweite Teilwicklung (2, 3) unterteilt ist, welche zur Erzeugung von sich addierenden Flüssen in Reihe geschaltet sind, wobei ferner dem Motor, der Glättungsinduktivität und der Feldwicklung eine Freilaufdiode (7) parallel geschaltet ist und die Induktivität mit einer Überbrückungsanordnung zur Verringerung der Erregung versehen ist, dadurch gekennzeichnet, daß die Überbrückungsanordnung (10) der Anordnung aus der erwähnten ersten Wicklung (3) und einer mit dieser ersten Wicklung (3) in Reihe geschalteten Diode (12) parallel geschaltet ist, und daß die Freilaufdiode (7) an einem der erwähnten Diode (7) und der ersten Wicklung (3) gemeinsamen Punkt angeschlossen ist.

2. Einrichtung nach Anspruch 1, dadurch gekennzeichnet, daß die Überbrückungsanordnung durch einen Thyristor (11) gebildet ist, dessen Löschung durch den Zerhacker (5) dadurch gewährleistet ist, daß die Überbrückungsanordnung (10) und der Zerhacker (5) mit der gleichen Frequenz arbeiten.

3. Einrichtung nach Anspruch 2, dadurch gekennzeichnet, daß die Überbrückungsanordnung (10), deren Löschung durch den Zerhacker (5) gewährleistet ist, den gesamten Feldwicklungsfluß regelt.

## Claims

1. Electric direct-current traction device which is equipped with at least one motor the armature winding of which is mounted in series with the rotor (1) and possibly one smoothing coil (6) and the power supply of which is controlled by a chopper-type direct-current converter (5) which is capable of being set to operate in continuous conduction mode, the armature being divided into at least one first and one second part winding (2, 3) which are mounted in series in order to produce additive fluxes, one freewheeling diode (7) which is mounted in parallel with the motor, the smoothing coil and the armature, the armature being provided with a shunting device for reducing excitation, characterised in that the shunting device (10) is mounted in parallel with the combination of the said first winding (3) and a diode (12) mounted in series with the said first winding (3), the freewheeling diode (7) being connected to the common point of the said diode (12) and to the said first winding (3).

2. Device according to Claim 1, characterised in that the shunting device consists of a thyristor (11) which is extinguished by the chopper (5) as a result of the fact that the shunting device (10) and the shopper (5) operate at the same frequency.

3. Device according to Claim 2, characterised in that the shunting device (10), which is extinguished by the chopper (5), controls the total armature flux.